# EUROPEAN PATENT SPECIFICATION

(11) **EP 3 860 331 B1**
(45) Date of publication and mention of the grant of the patent: **24.01.2024**
(21) Application number: 19801966.3
(22) Date of filing: 30.09.2019
(51) Int. Cl.: A01G 13/06, A01G 13/08

(54) **DEVICE FOR PREVENTING DAMAGE TO CROPS FROM FROST**
FROSTSCHUTZEINRICHTUNG FÜR NUTZPFLANZEN
DISPOSITIF ANTIGEL POUR CULTURES

(30) Priority: 01.10.2018 BE 201805669
(43) Date of publication of application: 11.08.2021
(73) Proprietor: AGROFROST, naamloze vennootschap, 1000 Brussel (BE)
(72) Inventor: POLLEUNIS, Marc Guy, 3470 Kortenaken (BE)
(74) Representative: IP HILLS NV
(86) International application number: PCT/IB2019/058299
(87) International publication number: WO 2020/070624

(56) References cited:
- AU-B3- 707 980
- US-A- 4 836 086

## Description

### TECHNICAL DOMAIN

A device and method are described that relate to the technical domain of preventing frost damage in agricultural and horticultural crops, improving the fruit set in case of low temperatures, or preventing other damage or problems that crops produced in agriculture or horticulture are faced with as a result of the ambient air temperatures being too low. More specifically a device and a method are described relating to the technical domain of preventing damage to agricultural and horticultural crops by means of heated ambient air.

### STATE OF THE ART

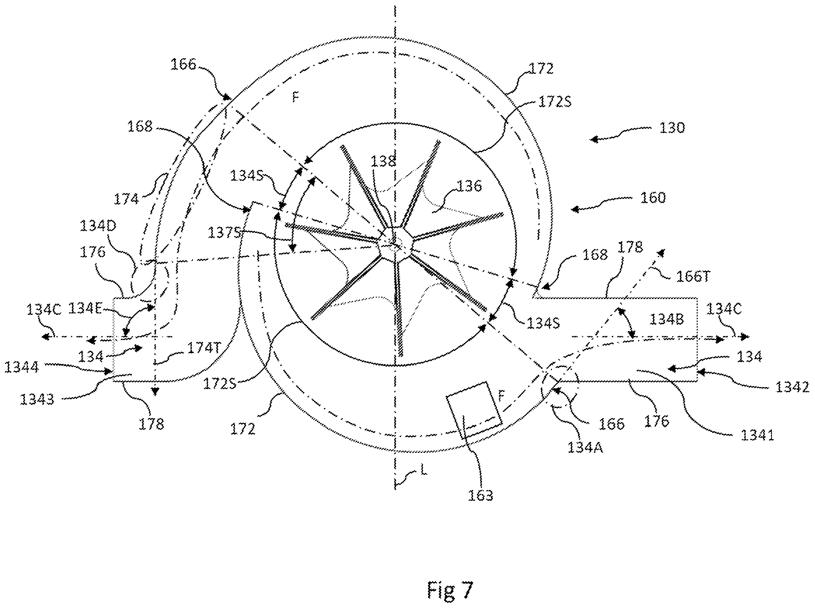

A device and method for combating frost damage is for instance known from EP0845204 in the name of Lazo Barra, Florencio Rosario. EP0845204 describes a method and a device for combating frost damage wherein the device by means of a burner heats ambient air and subsequently blows it over a field by means of a blower system. The device of EP0845204 is disposed on a vehicle for moving the device onward along the field with the crops that need protection against frost damage. EP0845204 describes a device using a centrifugal fan comprising two outlets for blowing out the heated air towards the crops. Both outlets blow the heated air towards the crops substantially horizontal and transverse to the driving direction of the vehicle. One of the outlets is then arranged higher than the opposing outlet situated lower, so that both outlets are arranged rotationally symmetric to the central axis of rotation of the centrifugal fan in an attempt to obtain an evenly distributed air flow at both outlets, with an as large as possible flow rate and fluid velocity and as little turbulence as possible from both outlets to reach an as large as possible surface area of crops as efficiently as possible with the heated air flow from both outlets. A similar device and method in the name of Florencio Lazo is for instance also known from AU199869051 B3. Here as well, as can for instance be seen in Figure 7 of this document, the heated air is blown towards the crops horizontal and transverse to the driving direction, wherein one of the outlets is arranged higher than the opposing outlet situated lower. It is clear that, as for instance indicated by the arrows in Figure 7, the heated air from the outflow openings of the device is blown out completely wide of the gas reservoirs, without the gas reservoirs forming an obstacle to the laminar, horizontal air flow that is blown out at a speed of between 180 and 200 km/hr. Therefore it is clear that the gas reservoirs in this document do not contact this laminar, horizontal air flow as blown out by the outflow openings of the device.

An alternative stationary device for combating frost damage is also known from for instance EP1834520 which makes use of a rotatable outflow channel that is connected to the outlet of the fan to disperse the heated air over an as large as possible surface area of crops to be protected.

An alternative apparatus for frost control in agricultural crops and orchards and alternatively for evaporating the rainwater from the crops is also known from for example AU 199869051 B3.

An improved gas burner to be used in such a device is for instance known from WO2018027285. Said gas burner ensures an optimal heating of the ambient air and an improved ignition, even at higher current velocities. However, at the lower temperatures in which such a device is used, sufficient supply of gas to the gas burner is reduced as in case of a falling temperature the pressure in the gas reservoirs decreases and/or the risk of the gas dropping below its boiling point and becoming unusable, increases. It is clear that this limits the flow rate of the heated air as well as the efficiency of the device. Furthermore, in actual practice this requires using a gas reservoir containing a gas with a sufficiently low boiling point, such as for instance propane having a boiling point of approximately -42°C. However, due to safety regulations in specific applications, countries or regions, such a gas type is not always usable. The use of an alternative gas with a higher boiling point, such as for instance butane having a boiling point of approximately 0°C, is not possible in actual practice for such a device as gas reservoirs cannot supply a sufficient flow rate and insufficiently ensure that they continue to be usable at temperatures around or below freezing point in which such a device for the protection of crops against frost damage is being used. However, the use of for instance butane could result in a higher energy-content and a higher safety level indeed.

Therefore, a need continues to exist for a more efficient device for the protection of crops by means of heated air, against for instance frost damage, which device is capable of treating a larger surface area of crops more efficiently and permits a larger flexibility in terms of the gas used for the gas burner, so that a gas having a larger energy-content can be used.

### SUMMARY

For that purpose a device is provided for preventing damage to crops by means of heated ambient air, comprising:
- a frame comprising a floor plate;
- one or more gas reservoirs arranged in the frame on top of the floor plate; where the bottom sides of the gas reservoirs face the floor plate;
- a gas burner operatively connected to the gas reservoirs, and configured for heating, by means of the combustion of gas from the gas reservoirs, ambient air supplied via an inlet and discharging it at an outlet; and
- a centrifugal fan operatively connected to the outlet opening of the gas burner for drawing in the heated ambient air via an inlet and blowing out the heated ambient air via one or more outlets of the centrifugal fan;

the device further comprises:
   - a heating device for the gas reservoirs comprising one or more channels configured for:
      - branching off a part of the flow of the heated ambient air to an outlet of the centrifugal fan via an inlet;
      - allowing the branched-off heated ambient air to flow through the channel to a downstream outlet of the channel; characterized in that
the device further comprises:
   - respective openings provided through the floor plate at the locations where the gas reservoirs are placed on the floor plate with their bottom sides;
said one or more channels of said heating device for the gas reservoirs being configured for allowing the branched-off heated ambient air to flow through the openings upwards to the bottom side of at least one gas reservoir via the outlet.

That way the efficiency of the device is increased in a simple way. By supplying the branched-off part of the heated ambient air to the bottom side of the gas reservoir a substantial increase of evaporation of the gas in the gas reservoirs is achieved. As a result, supplying gas from the gas reservoir to the burner is increased, as a consequence of which the burner is able to process a larger flow rate of ambient air and therefore the flow rate and the fluid velocity of the ambient air heated by the device and blown out by the fan, can be increased. It is clear that in this way a larger surface area of crops can be protected as the larger fluid velocity will permit that the heated air can be dispersed over a larger distance from the outlet of the fan, and that the driving speed of the vehicle can for instance also be increased as a result of which a larger surface area can be covered in a same time span. It is clear that this means that the used volume of gas for a specific protected surface area can go down, and that the heating of the bottom side of the gas reservoir permits the use of gasses or gas mixtures of a higher energy density. By supplying the heated ambient air to the bottom side of the gas reservoir, an evaporation of the gas in the reservoir is achieved that is at least five times higher than when the heated ambient air is not supplied to the bottom side of the gas reservoir.

It is clear then that the heating device is configured for allowing the branched-off heated ambient air to flow upwards to the bottom side of at least one gas reservoir via the outlet.

Furthermore, it is clear that the heating device preferably comprises two or more gas reservoirs and is configured to allow flowing of the branched-off heated ambient air to the bottom sides of several, preferably all, gas reservoirs of the device that are operational by means of the gas burner.

Furthermore, it is clear that the bottom side of the gas reservoir preferably consists of the bottom side of the part of the gas reservoir in which the gas is contained, or in other words the part of the gas reservoir extending between the upwardly oriented sidewalls of the gas reservoir on a side facing the ground surface, when the gas reservoirs are operatively arranged in the device.

Furthermore, it is clear that the device comprises a frame in which the gas reservoirs are arranged, wherein this frame comprises a floor plate on top of which the, preferably several, gas reservoirs are placed. It is clear then that the bottom sides of the gas reservoirs face this floor plate. In the bottom plate, at the location where the gas reservoirs are placed on the bottom plate with their bottom sides, respective openings through the bottom plate are provided, so that the outlet of the respective channels of the heating device is capable of allowing branched-off heated ambient air through these openings to the bottom sides of the gas bottles. According to a preferred embodiment, one outlet is provided for each gas reservoir.

According to a preferred embodiment, the channels are arranged at the location of the bottom side of the bottom plate on which the gas reservoirs are placed. On the downstream side, that means on the side connecting to the outlets, the part of the channels of the heating device preferably comprises a separate channel per outlet. It is clear then that in that way from each of these outlets, branched-off heated ambient air is capable of flowing upwards to the bottom side of each of the operatively connected gas reservoirs, for instance through corresponding openings provided in the bottom plate. According to one embodiment, the device comprises several channels, for instance one per gas reservoir. It is clear that alternative embodiments are possible wherein for instance several outlets for each channel are arranged. According to a preferred embodiment, the channels run substantially along the bottom side of the bottom plate to the outlets where they are capable of blowing branched-off heated ambient air through the related openings in this bottom plate in the direction of the position of the bottom sides of the gas reservoirs, or in other words: upwards toward the bottom sides of the gas reservoirs.

According to one embodiment a device is provided wherein the heating device is configured such that the flow rate of the branched-off heated ambient air is lower than 50% of the flow rate supplied to the outlet of the centrifugal fan.

According to another embodiment a device is provided wherein the heating device is configured such that the flow rate of the branched-off heated ambient air is lower than or equal to 25% of the flow rate supplied to the outlet of the centrifugal fan.

According to another embodiment a device is provided wherein the inlet comprises a cross-section having a surface area that is smaller than 50% of the surface area of the cross-section of the outlet, preferably smaller than or equal to 25%, for instance in the range of 5% to 20%.

In that way, the branched-off flow rate for the heating device is kept relatively sufficiently small in comparison with the flow rate coming out of the one or more outlets of the centrifugal fan, so that the air flow at the location of the outlet where the heated air is branched off, is disrupted as little as possible and an as large as possible flow rate of the heated air remains available for the protection of the crops. In addition, the branched-off flow rate for the heating device preferably is also chosen sufficiently large for obtaining a suitable flow rate and fluid velocity of the heated air at the location of the bottom sides of the respective gas reservoirs so that the gas reservoirs are capable of an optimal supply of the gas to the gas burner and/or the other elements of the device.

According to another embodiment, a device is provided wherein the centrifugal fan comprises two opposing outlets.

This permits two similar flows of heated ambient air to be blown out in order to protect crops on either side of the device.

According to another embodiment, a device is provided wherein the centrifugal fan comprises an impeller having an upward central rotary shaft.

According to another embodiment, a device is provided wherein the outlets of the centrifugal fan are arranged at an equal height above the ground surface.

In that way the crops on the side of the various outlets are protected at an optimal height by the heated ambient air that is blown out.

According to another embodiment, a device is provided wherein the outlets of the centrifugal fan are configured for blowing out the heated ambient air at an angle of 10° or less to the ground surface.

This permits blowing out the heated ambient air over an as large as possible distance from the outlets, in order to protect an as large as possible surface area of crops as efficiently as possible in that way.

According to another embodiment, a device is provided wherein the one or more outlets comprise an outlet channel which connects to an upstream buckle as a result of which the central longitudinal axis of the outlet channel is at an angle to the tangential direction of the curvature of the respective upstream segment of the respective sidewall of the housing.

In that way, the pressure distribution and/or the distribution of the current velocities at the location of the outlet become more balanced as will be described in more detail below, so that a larger surface area of the crops to be protected can be sprayed with heated ambient air.

According to another embodiment, a device is provided wherein the device comprises a vehicle to which:
- the gas burner;
- the gas reservoirs;
- the centrifugal fan; and
- the heating device
are arranged.

The improved supply of gas from the gas reservoirs due to the supply of branched-off heated ambient air to the bottom side of the gas reservoirs, ensures a more efficient heating of the ambient air in the burner, greater flexibility in terms of the gas used and a larger temperature range wherein the device remains usable for the protection of crops against the consequences of ambient temperatures that are too low. This for instance permits the gas consumption for the protection of a specific surface area of crop to decrease as a result of which the vehicle with a specific supply of gas can be kept operational for a longer period of time without the gas having to be replenished. This furthermore also permits dispersing the heated ambient air at a larger driving speed at a larger flow rate, as a result of which a specific surface area of crops can be protected more readily or in the same time span a larger surface area of crops can be protected. This is particularly important when sudden, unexpected drops in temperature threaten a large surface area of crops.

According to another embodiment, a device is provided wherein the centrifugal fan comprises two outlets that are arranged on both sides of the central longitudinal axis according to the direction of movement of the vehicle and are configured to blow the heated ambient air blown out according to a direction away from the central longitudinal axis.

This makes protecting the crops on either side of the vehicle during a passage of the vehicle possible, and in that way maximizes the protected surface area during a passage of the vehicle.

According to another embodiment, a device is provided wherein both outlets are arranged rotationally symmetric around the central rotary shaft of the centrifugal fan.

This makes it possible to divide the flow rate easily and evenly over both outlets.

According to another embodiment, a device is provided wherein the centrifugal fan comprises a housing including:
- two opposing rotationally symmetric segments; and
- in between of them two rotationally symmetric openings for the outlets, and
wherein a segment is arranged that connects downstream to one of the segments and that extends onward at an angle that is larger than the angle of the related opening of the outlet.

In that way a larger flow rate is obtained and an even distribution of the flow rate is maintained.

According to another embodiment, a device is provided wherein the additional segment that is present at only one of the two outlets, has a curvature that differs from the curvature of the connecting rotationally symmetric segment.

Such a curvature at one of the outlets has the advantageous effect of a larger flow rate and fluid velocity at both outlets.

According to another embodiment, a device is provided wherein the curvature of this segment is configured such that, where said segment extends beyond the segment of the opposing sidewall, said sidewalls run substantially parallel.

In that way an optimal flow of heated ambient air is obtained, with a minimum of turbulence.

According to a second aspect of the invention, a method is provided for preventing damage to crops, wherein the device according to the first aspect of the invention is used, and wherein the method comprises the following steps:
- providing respective openings through the floor plate at the locations where the gas reservoirs are placed on the floor plate with their bottom sides;
- the heating device branching off a part of the flow of the heated ambient air to an outlet of the centrifugal fan via the inlet;
- the heating device allowing the branched-off heated ambient air to flow through one or more channels to one or more downstream outlets of the one or more channels; and
- the heating device allowing the branched-off heated ambient air to flow through the openings upwards to the bottom side of the at least one gas reservoir via the one or more outlets.

### BRIEF DESCRIPTION OF THE FIGURES

A few embodiments will be described by way of example on the basis of the Figures wherein:
- Figures 1A - 1B show a side view and a top view of an embodiment of a device for preventing damage to crops in case of low temperatures;
- Figures 2A - 2B show a partial cross-section and a top view of the embodiment of Figures 1A- 1B;
- Figures 3A- 3B show views similar to Figures 1A- 1B without the gas reservoirs being present;
- Figures 4A - 4D show various views relating to the heating device and gas reservoirs of the embodiment of Figures 1A- 1B;
- Figure 5 shows the embodiment of the channels of the heating device of Figures 1A - 1B in more detail;
- Figures 6A - 6D show various views relating to the heating device and the fan of the embodiment of Figures 1A- 1B;
- Figures 7 - 8 show various views of an advantageous embodiment of a centrifugal fan for an embodiment of the device similar to Figures 1A- 1B;
- Figures 9-20 show different further embodiments of such a device and centrifugal fan.

### DESCRIPTION

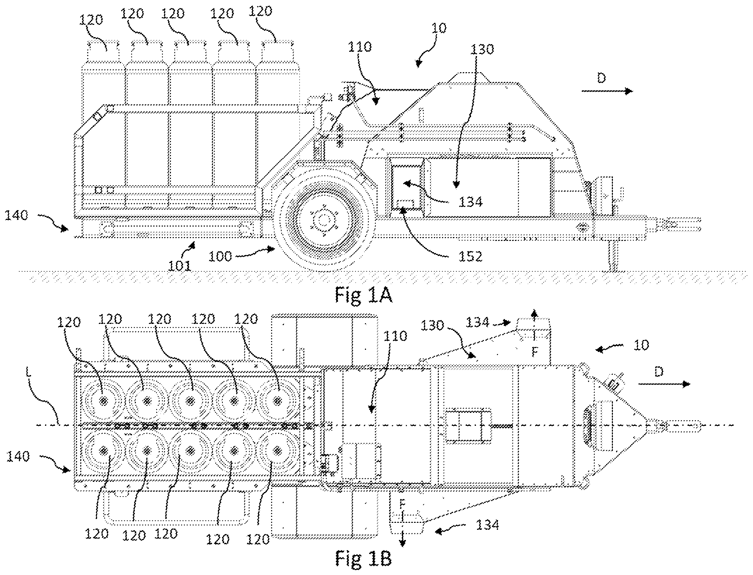

Figure 1A shows a side view of an embodiment of a device 10 for preventing damage to crops by means of heated ambient air. As described above, it for instance relates to the protection of crops against too low an ambient temperature, such as for instance the protection of crops against frost damage, or a reduced fruit set etc. It is clear that such a device 10 protects crops in case of ambient temperatures in the range of 0°C or lower, but it is clear that alternative embodiments are possible that are used in another suitable temperature range, such as 10°C or lower, 5°C or lower, etc.

As can be seen, the embodiment shown in Figure 1A comprises a vehicle 100 in the form of a trailer which can be driven according to the direction of movement indicated by arrow D when coupled to a suitable vehicle, such as for instance an agricultural vehicle, such as for instance a tractor. However, it is clear that alternative embodiments are possible, wherein the device is arranged, added, coupled directly to a self-driven vehicle such as for instance an agricultural vehicle, such as a tractor. However, it is clear that even further alternative embodiments of the device are possible that do not comprise a vehicle 100 and that are stationary during operation.

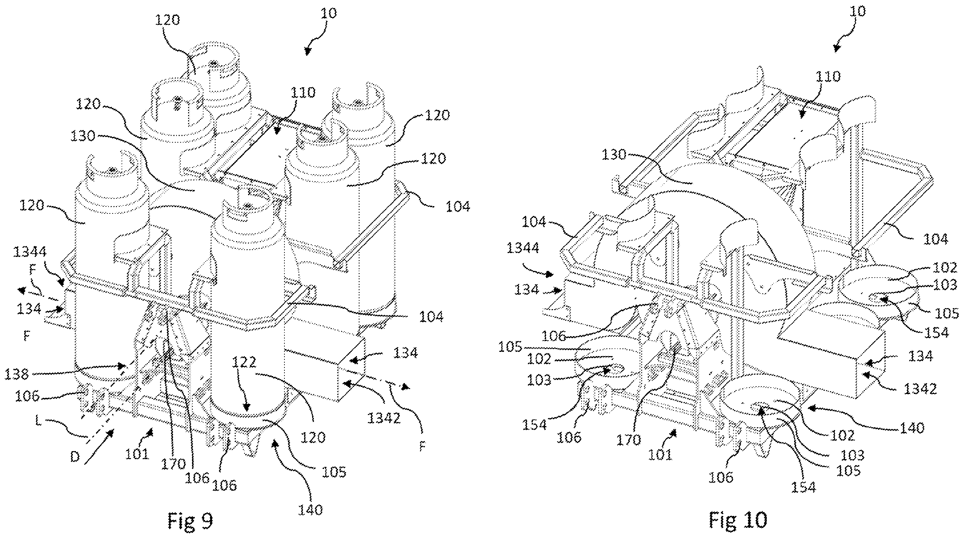

As can be seen in Figure 1A, the device 10 furthermore comprises a gas burner 110, several gas reservoirs 120, a centrifugal fan 130 and a heating device 140 which are arranged on the frame 101 of the vehicle 100. It is clear that in alternative stationary embodiments of this invention, these elements can be arranged so as to be stationary, for instance on a stationary frame 101 of the device 10. According to even further alternative embodiments, as for instance further described on the basis of Figures 9 - 11, the device 10 can be arranged on a frame 101 which is configured to be removably attached to a suitable vehicle, such as for instance a tractor, in order to be transported by this vehicle during use.

As can be seen in Figure 1A, and as will be further elucidated, a part of the flow of the heated ambient air is branched off to an outlet 134 of the centrifugal fan 130 via an inlet 152.

Figure 1B shows the top view of the embodiment of the device 10 of Figure 1A. As is clear, the embodiment of the device comprises ten gas reservoirs 120, which, as is shown, are configured as suitable gas bottles or gas cylinders for storing a suitable amount of gas. It is clear that preferably such gas bottles or gas cylinders contain a suitable gas or gas mixture, for instance propane, butane or a suitable mixture thereof. It is clear that typically the gas is stored in such gas reservoirs under pressure and liquidized. It is clear that alternative embodiments are possible with a different number of gas reservoirs, for instance embodiments are possible having one or more gas reservoirs, for instance having two, three, four, six, eight, ten, twelve, etc. gas reservoirs. Preferably, the device 10 comprises two or more gas reservoirs 120, as in that way an empty gas reservoir does not necessitate the immediate replacement of the empty gas reservoir by a full reservoir or refilling the empty gas reservoir 120. The operations of the device can be continued using another gas reservoir 120 until a suitable moment or location is arrived at for replacing or filling empty gas reservoirs 120.

Figure 1B also shows that the centrifugal fan 130 comprises two outlets 134 for blowing out heated ambient air. As can be seen, according to the top view said two outlets 134 are arranged on either side of the longitudinal axis L of the device 10, so that as considered according to the direction of movement D, the blown out ambient air is blown out sideward, on both sides, that means to the left and to the right, away from the central longitudinal axis L, as schematically indicated by arrows F. Therefore it is clear that in this way, when moving the vehicle 100 onward according to the direction D, crops on both sides of the device will be exposed to the heated ambient air blown out from both outlets 134 of the centrifugal fan 130. It is clear from Figures 1Aand 1B that the outlets 134 are arranged at substantially the same height above the ground surface. According to the embodiment shown in Figures 1A and 1B, and as furthermore can be seen more clearly in the next Figures, it is clear that both outlets are positioned rotationally symmetric around the vertical central rotary shaft of the centrifugal fan, as a result of which the outlet 134 is arranged on both sides at a different location according to the central longitudinal axis. In other words: the outlet 134 on one side is positioned more forward according to the direction of movement D than the outlet 134 on the opposing side is. Furthermore, it is clear that according to the embodiment shown, the outlets 134 will blow out a substantially horizontal flow of heated ambient air. That means at an angle deviating less than 10° from the ground surface. As will be described in more detail below, it is clear that alternative embodiments are possible wherein the centrifugal fan comprises two outlets 134, more specifically two opposing outlets 134, that means on either side of for instance the central longitudinal axis L of the device 10 according to the direction of movement D.

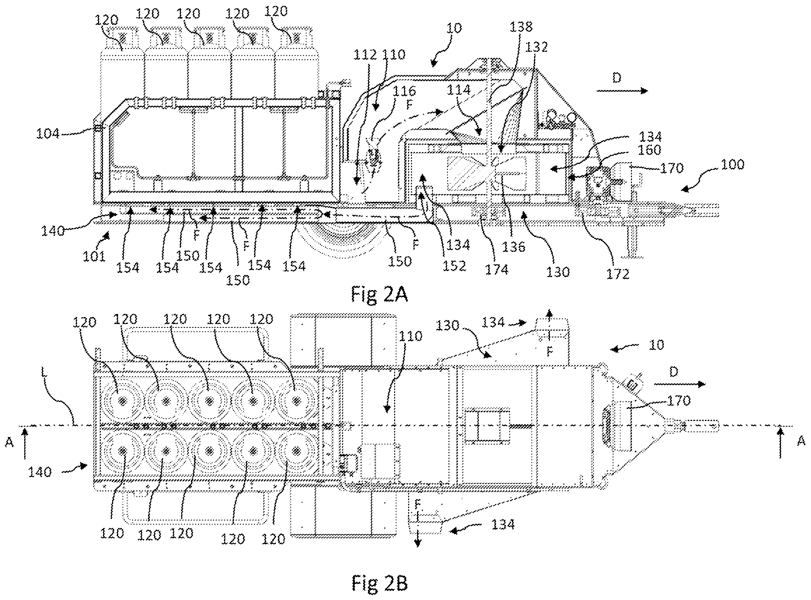

Figure 2B shows a top view of an embodiment of the device 10 similar to Figure 1B. Figure 2B schematically shows a cross-section according to the longitudinal axis L as indicated by arrows A-A in Figure 2B. It is clear that the gas burner 110 is operatively connected to the gas reservoirs 120. The gas burner 110 is connected to the gas reservoirs 120 for instance via suitable pipes, controllers, etc., so that a suitable flow of gas from the gas reservoirs 120 is able to flow to the gas burner 110 during the device 10 being operational. By the combustion of gas from the gas reservoirs 120, the gas burner 110 is thus capable of heating ambient air supplied via an inlet 112 of the gas burner 110 and discharge it to an outlet 114 of the gas burner 110. According to an embodiment shown in Figure 2A, the ambient air for instance flows downward as schematically indicated by arrow F from the inlet 112 to the outlet 114 via the gas combustion element 116 of the gas burner 110. It is clear that in this way the gas burner 110 supplies heated ambient air to the outlet 114. As indicated above, the embodiment of the gas burner 110 may for instance be similar to the one described in WO2018/027285, however it is clear that alternative embodiments of suitable gas burners are also possible which, by means of combusting the gas supplied from the gas reservoirs, heat the ambient air supplied via the inlet 112 for subsequently discharging it to the outlet 114.

As can be seen in Figure 2A, the outlet 114 of the gas burner 110 is connected to an inlet 132 of the centrifugal fan 130. The centrifugal fan 130, as is known to an expert, is operational to accelerate the heated ambient air that is supplied via a central inlet 132 by means of a rotatable impeller 136, as a result of which the accelerated heated ambient air is urged to the outside so as to rotate radially around the central rotary shaft 138 of the impeller 136 and is supplied to both outlets 134 via the housing 160 around the radial outer ends of the impeller 136 in order to be blown out of the centrifugal fan 130 at that location. It is clear that both outlets 134 are at a position that is radially further removed from the central rotary shaft 138 than the axial, central inlet 132 of the centrifugal fan 130. It is clear that the inlet 132 and the outlet 134 of the centrifugal fan 130 are formed by suitable openings 132, 134 in the housing 160 of the centrifugal fan 130. In other words: the centrifugal fan 130 is operational to draw in heated ambient air from the gas burner 110 via the inlet 132 and subsequently blow it to the outside from both outlets 134. It is clear that the embodiment shown is similar to the embodiment of the centrifugal fan such as for instance described in more detail in EP0845204; however, it is clear that the rotary shaft of the centrifugal fan is arranged at a different orientation. As can be seen in the embodiment of Figure 2A, the central rotary shaft 138 is upward, that means arranged transverse to the driving direction D and transverse relative to the ground surface. This for instance means at an angle with a deviation of less than 10° relative to such transverse directions. This provides the advantage that both outflow openings 134 of the centrifugal fan are situated at a similar height relative to the ground surface, as a result of which the height at which the crops are exposed to the flow of heated ambient air blown out of the outflow openings 134 is substantially the same on both sides of the device 10 and the effect on both sides of the device therefore is similar and the heated air can be blown out on both sides at an optimal height relative to the ground surface. As can be seen, according to the embodiment shown the rotary shaft 138 of the impeller 136 of the centrifugal fan 130 is suitably bearing mounted at the top and at the bottom, for instance to the frame or the housing of the device 10. According to the exemplary embodiment shown, the centrifugal fan 130 further comprises a suitable actuator 170, which for instance via a suitable pulley coupling 172, 174 that is partially shown, is operatively connected to the rotary shaft 138 to allow the impeller 136 to rotate suitably when the device 10 is operational. According to the exemplary embodiment shown, the actuator 170 is for instance configured as a suitable gas motor that is also fed with gas from the gas reservoirs 120, however, it is clear that according to alternative embodiments any suitable actuator and/or coupling can be used for driving the centrifugal fan 130, such as any suitable electric, hydraulic, mechanical, etc. actuator. The embodiment shown of the impeller 136 comprises several radial blades, however, it is clear that alternative embodiments of the impeller 136 are possible having a suitable number, suitable shape, suitable orientation, etc. for the blades of the impeller 136.

As can further be seen in Figure 2A, the embodiment of the device 10 further comprises a heating device 140 for the gas reservoirs 120. As can be seen, according to the embodiment shown, a part of the heated ambient air is branched off to one of the outlets 134 of the centrifugal fan 130 via an inlet 152 of a channel 150 of the heating device. As indicated by arrow F, the branched-off heated ambient air then continues its way downstream along this channel 150 and subsequently various other downstream channels 150 to several downstream outlets 154 of these channels 150. As can be seen, and is described in more detail below, these outlets 154 of the channels 150 are situated at the bottom side 122 of the gas reservoirs 120. In other words: the outlets 154 of the channels 150 are arranged such that they allow the branched-off ambient air to flow to the bottom side 122 of a gas reservoir 120 arranged above it. As is shown in more detail below, the embodiment shown comprises one outlet 154 underneath each gas reservoir 120, that means for instance ten outlets 154 underneath the respective bottom sides 122 of the respective ten gas reservoirs 120. However, it is clear that alternative embodiments are possible, wherein the device 10 comprises a heating device 140 for the gas reservoirs 120 and wherein similar to the embodiment shown, the heating device 140 comprises one or more channels 150 that are configured for via an inlet 152 branching off a part of the flow of the heated ambient air to an outlet 134 of the centrifugal fan 130; subsequently allowing the branched-off heated ambient air to flow through the one or more channels 150 to one or more downstream outlets 154 of the one or more channels 150, so that the branched-off heated ambient air flows to the bottom side 122 of the at least one gas reservoir 120 via the one or more outlets 154.

As can be seen in Figures 1A and 2A, the surface area of the cross-section of the inlet 152 is smaller than the cross-section of the outlet 154. In other words: only a part of the flow rate of the heated air is branched off to the outlet 134 of the centrifugal fan 130 via the inlet 152. According to the exemplary embodiment shown, the surface area of the opening of the inlet 152 and the cross-section of the channel 150 at its upstream part at the location of the inlet 152 is in the range of 10% to 15% of the surface area of the opening of the outlet 134 where the heated air is branched off. It is clear that according to the embodiment shown approximately 10% up to and including 15% of the flow rate of the heated air that is forced to that outlet 134 is branched off by the heating device 140. It is clear that alternative embodiments are possible, wherein it is preferred that the branched-off flow rate for the heating device 140 is kept relatively sufficiently small relative to the flow rate coming out of the one or more outlets 134 of the centrifugal fan 134, so that the air flow at the location of the outlet where the heated air is branched off is disrupted as little as possible and an as large as possible flow rate of the heated air remains available for the protection of the crops. It is also clear that the branched-off flow rate for the heating device 140 preferably is also chosen sufficiently large for obtaining a suitable flow rate and fluid velocity of the heated air at the location of the bottom side of the gas reservoirs 120 so that the gas reservoirs 120 are capable of optimally supplying the gas to the gas burner 110 and/or the other elements of the device. In general it would be best if the branched-off flow rate for the heating device 140 is lower than 50% of the flow rate blown out of the outlet 134 where the heated air is branched off, preferably lower than or equal to 25%, preferably 5% up to and including 20%. Furthermore it is clear that in the exemplary embodiment shown having two outlets 134, the heated air for the heating device 140 is branched off to one outlet 134 only. It is clear that alternative embodiments are possible wherein the heated air is branched off at the location of both outlets 134, for instance by means of two channels 150, each having an inlet 152 respectively at the location of an outlet 134 of the centrifugal fan 130. It is clear that numerous alternative embodiments are possible, and that in general it is preferred that the flow rate of the branched-off heated air for the heating device is lower than 50% of the flow rate generated by the centrifugal fan 130 for all outlets 134 of the centrifugal fan, preferably lower than 25%, preferably 2% to 15%.

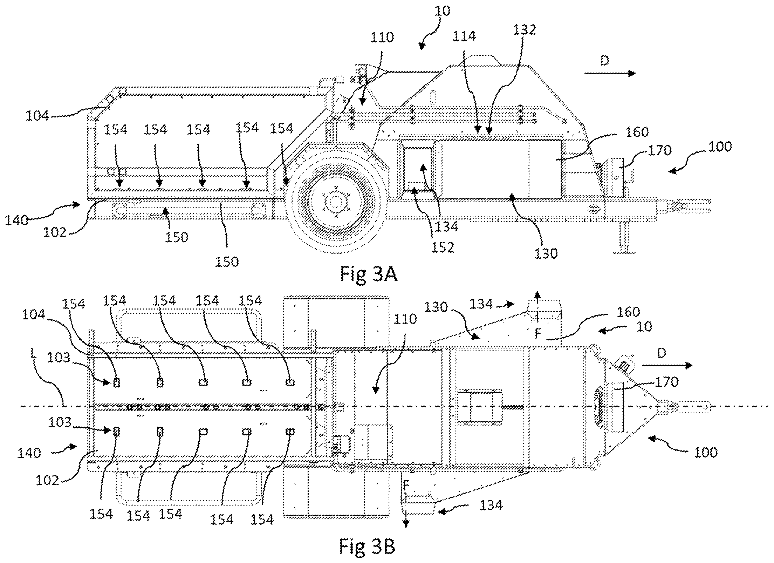

Figures 3A and 3B show similar views of the embodiment as shown in Figures 1A and 1B, respectively. The gas reservoirs 120 have however been removed so as to be able to better show the outflow openings 154 of the channels 150 of the heating device 140 that are positioned for blowing the branched-off heated ambient air to the bottom sides of the gas reservoirs 120. As can be seen, the vehicle 100 comprises a frame 104 in which the gas reservoirs 120 are arranged. This frame comprises a floor plate 102 on top of which the gas reservoirs 120 are placed. As can furthermore be seen, the frame is configured as an open frame 104 for arranging the gas reservoirs 120 on the vehicle, as a result of which the gas bottles 120 remain easily accessible in order to be replaced when they are empty. As can be seen, in the bottom plate 102 respective openings 103 are provided through the bottom plate, at the locations where the gas reservoirs 120 are placed on the bottom plate with their bottom sides 122, so that the outlet 154 of the respective channels 150 of the heating device 140 is able to allow branched-off heated ambient air through said openings 103 to the bottom sides 122 of the gas bottles 120. As can be seen, according to the embodiment shown ten outlets 154 are present, that means one outlet for each gas reservoir 120.

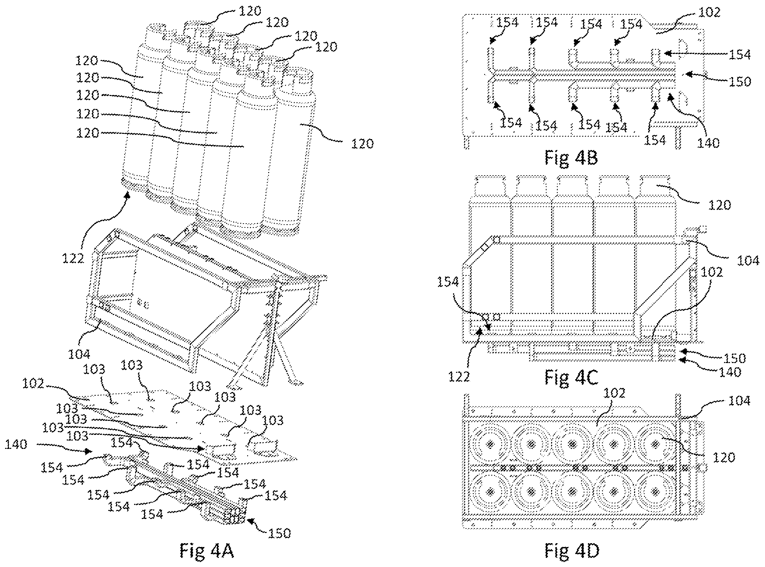

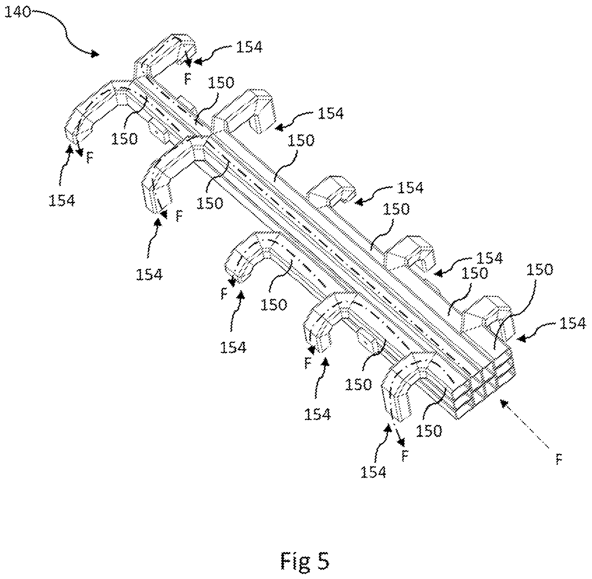

Figure 4A shows an exploded view of the elements of the embodiment described above in more detail. As can be seen in Figure 4Athe channels 150 are arranged at the location of the bottom side of the bottom plate 102 on which the gas reservoirs 120 are arranged. The part of the channels 150 of the embodiment shown of the heating device 140, on the downstream side, that means the side connecting to the outlets 154, comprises a separate channel per outlet 150. As can be seen, the embodiment of the heating device 140 therefore comprises ten channels 150, or in other words: one per gas reservoir 120. It is clear that alternative embodiments are possible, wherein for instance several outlets 154 per channel 150 are arranged. As can be seen, the channels 150 run substantially along the bottom side of the bottom plate 102 to the outlets 154 where they are capable of blowing the branched-off heated ambient air through the related openings 103 in this bottom plate 102 in the direction of the positions of the bottom sides 122 of the gas reservoirs 120. Figures 4B, 4C and 4D show a bottom view, side view and top view, respectively, of the elements of the exploded view of Figure 4A in assembled condition. Figure 5 shows a more detailed view in perspective seen from below of the embodiment of the ten channels of the part of the heating device 140 shown in Figures 4A-D. The downstream direction of the branched-off heated ambient air was schematically indicated for some channels 150 by means of arrows F.

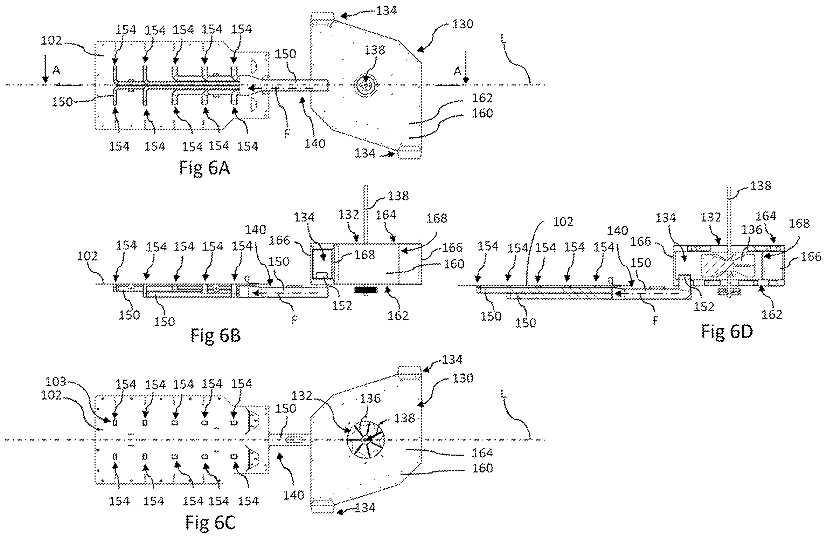

Figure 6A shows a bottom view of the embodiment of the heating device 140 similar to the one shown in the detail in Figure 4B. It is clear that at the location of the outlets 154 the ten channels 150 in upstream direction merge into one joint channel 150 coupling individual channels 150 to the inlet 152 that is arranged at the location of an outlet 134 of the centrifugal fan 130 in order to branch off a part of the heated ambient air. As can be seen, said upstream channel 150 runs from the bottom side of the bottom plate 102 up to the bottom wall 162 of the housing 160 of the centrifugal fan 130. It can further be seen that this channel 150 subsequently passes through the bottom wall 162 of the housing 160 up into the outlet 134 of the centrifugal fan 130, where the inlet 152 of this channel 150 branches off heated ambient air in order to flow through this upstream joint channel to the upstream separate channels 150 and finally to allow it to flow via their respective outlets 154 to the bottom sides 122 of the gas reservoirs 120. However, it is clear that alternative embodiments of the heating device 140 are possible, wherein in an alternative manner one or more suitable channels 150 branch off heated ambient air to one or more outlets of the centrifugal fan 130 in order to supply it to one or more outlets 154 for supplying this heated ambient air to the bottom side of the one or more gas reservoirs 120.

Figure 6B shows a side view of the elements of the device shown in Figure 6A and shows in more detail how the inlet 152 of the channels 150 of the heating device 140 branches off heated air to an outlet 134 and discharges this branched-off heated ambient air via a first single channel 150 through the bottom side 162 of the housing 160 of the centrifugal fan 130, subsequently along the bottom side of the centrifugal fan 130 to the various channels 150 underneath the bottom plate 102, and subsequently to the outlets 154 which allow the heated ambient air to flow through the openings in the bottom plate 102 to the bottom sides 122 of the gas reservoirs 120. Figure 6B also shows in more detail that the housing 160 of the centrifugal fan 130 in the arranged condition of the embodiment of the device comprises a bottom side 162, comprises an upper side in which the inlet 132 is arranged in the form of a central axial opening and comprises an exterior sidewall 166 which together with an interior sidewall 168 forms the outlets 134 as shown. Figure 6C shows the top view of the embodiment of Figures 6A and 6C. It is clear that in this top view the impeller 136 is visible through the inlet 132 of the centrifugal fan 130 which is formed by a central, axial opening in the upper side 164 of the housing 160 of the centrifugal fan 130. Figure 6D shows a cross-section according to the line A-A in Figure 6A, that means along the longitudinal axis L of the elements of the device shown in Figures 6A-C.

Experiments have shown that when the gas in the gas reservoir consists of propane, the flow rate of the heated ambient air could be increased up to seven times using the device 10 shown, in which a heating device 140 supplies the branched-off heated ambient air to the bottom sides 122 of the gas reservoirs 120, as compared to the situation in which no heated ambient air was supplied. It was furthermore shown that alternatives, such as exposing other sides of the gas reservoir to heated ambient air and/or arranging the gas reservoirs in a confined space cannot effect a similar increase of the maximum flow rate.

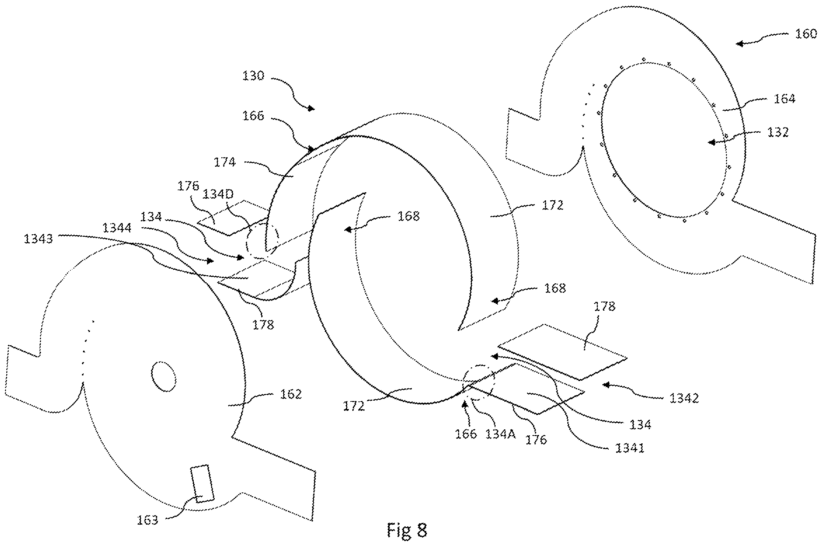

Figure 7 shows an alternative embodiment of the centrifugal fan 130 that is suitable to be used in the device as described above. The centrifugal fan 130 is similar to the one described above and also comprises two outlets 134, which in a similar manner are capable of blowing heated ambient air to the crops to be protected on both sides of the central longitudinal axis L of the device 10. As can be seen in Figure 7, the downstream direction of the heated ambient air to the outlets is schematically indicated by arrows F and is effected by the cooperation of the rotating impeller 136 and the housing 160 of the fan 160 the sidewalls 166, 168 of which are shown. As can be seen, similar to the embodiment of the centrifugal fan 130 as described above, the housing 160 comprises two opposing rotationally symmetric segments 172 which at the location of the outlets 134 at their outer ends form an exterior sidewall 166 and an interior sidewall 168. It is clear that these opposing rotationally symmetric segments of the sidewalls of the housing constitute the largest segment of the housing and extend in an angular range of 172S of for instance 120° up to and including 175°, respectively. As can be seen, two rotationally symmetric openings connecting to the outlets 134 are situated between both segments 172. As can be seen, those openings extend at a smaller angle 134S around the central rotary shaft 138 of the impeller 136, respectively. This angle 134S for instance is 5° to 60°, respectively. It is clear that one of the outlets 134, at the downstream end of the segment 172, where this segment 172 forms the exterior sidewall 166 of the opening for the related outlet 134, merges into an extra segment 174, for which the sidewall at the opposing side does not comprise a rotationally symmetric segment. Preferably, this segment 174 extends onward along an angle 137S that is larger than the angle 134S of the related opening of the outlet 134. The angle 137S is for instance in the range of 150% to 250% of the angle 134S. Furthermore it is clear that this additional segment 174 that is present at only one of the two outlets 134, has a curvature that differs from the curvature of the preceding rotationally symmetric segment 172. The curvature of this segment 174 according to the embodiment shown is selected such that, where this segment 174 extends beyond the segment 172 of the opposing sidewall, both sidewalls 174 and 172 run substantially parallel. As can be seen, a channel is formed in that way that substantially extends along a specific angle 137S parallel along the exterior of the opposing sidewall and subsequently bends to obtain an air flow out of the outlet 134 that faces away from the central longitudinal axis L. It is furthermore clear that a channel can also be arranged at the opposing outlet in order to also allow the air flow to flow away from the longitudinal axis L in a suitable manner. In that case it is advantageous that, similar to what is shown in Figure 7, this outlet 134 comprises an outlet channel 1341 arranged at an angle 134B to the tangential direction 166T of the curvature of the upstream segment 172 of the sidewall 166 as indicated by arrow 166T. As can be seen, this means that the outlet 134 connects to this outlet channel 1341 the central longitudinal axis of which, indicated by arrow 134C, is substantially transverse to the central longitudinal axis L of the device 10. It is clear that according to the exemplary embodiment shown, this outlet channel 1341 is formed by means of substantially parallel opposing elongated sidewalls 176, 178, which at their upper and bottom sides are also covered by an upper side 164 and bottom side 162 of the housing 160 as for instance shown in Figure 8. According to the downstream direction F, the heated ambient air then flows onward through this outlet channel 1341 up to an outflow exit 1342, where, as indicated, the heated ambient air flows to the outside, out of the fan 130. Furthermore it is clear that according to the exemplary embodiment shown, this results in a buckle 134A, at the location of the transition from the curvature of the segment 172 into the rectilinear sidewall 176 of the outlet channel 1341. As indicated by arrow F, which in addition to the direction of the flow of the heated ambient air also indicates the position where this flow reaches the maximum pressure and/or fluid velocity, at the location of the curvature of the segment 172 the maximum pressure and/or fluid velocity in this flow of the heated ambient air is situated radially closer to this segment 172 of the sidewall. As can be seen, the orientation of the outlet channel 1341 ensures that the zone maximum pressure and/or fluid velocity in the flow of the heated ambient air in the outlet channel 1341 will position itself more central between the opposing sidewalls 176 and 178, so that, as is indicated, the maximum pressure and/or fluid velocity in the flow of the heated ambient air at the location of the outflow exit 1342 of this outlet channel 1341 is situated closer to the center of this outflow exit 1342. Therefore, it is clear that in this way not only a flow of heated ambient air is blown out of the fan, the direction F of which is substantially transverse to the longitudinal direction L, but also with a pressure distribution the highest pressure of which is positioned substantially central in the outflow exit 1342 of the outlet channel 1341. It is clear then that the same applies to the distribution of the fluid velocity. That means with a deviation of 20% at the most, preferably 10% at the most, relative to the position of the center of the outflow exit 1342 of the outlet channel 1341. In that way, an air flow is obtained that will continue to move transverse to the longitudinal direction L over larger distances as well. It is clear that this maximizes the distance the flow of heated ambient air traverses, considered according to a direction transverse to the longitudinal direction L, for instance corresponding to the driving direction D, of the device 10. It is clear that this makes it possible to maximize, for instance, the treated surface area in each passage of the vehicle of the device 10. Experiments showed that with the orientation shown of the outlet channel 1341, the air flow could realize a distance transverse to the central longitudinal axis L, or driving direction D, of approximately as far as 70 meters. A comparative experiment using a similar fan, with an orientation of the outlet channels as for instance indicated in EP0845204, only manages to span a transverse distance of approximately 50 up to 60 meters relative to the central longitudinal axis L or the driving direction D. This is because the pressure distribution and/or distribution of the fluid velocity in such a known tangential outlet channel is such that the maximum pressure and/or fluid velocity is situated more towards the radial outermost sidewall, which gives rise to a blown out flow of heated ambient air having a deviating, usually curved, trajectory relative to the direction transverse to the driving direction, as a result of which the maximum distance transverse to the central longitudinal axis L of the device is limited. As can be seen, the angle 134B between the tangential direction 166T and the central direction 134C, according to the exemplary embodiment, preferably is in the range of 40° to 60°, for instance 50°. As can furthermore be seen in Figure 7, the opposing outlet 134, connecting to the downstream end of the segment 174, in a similar way also comprises an outlet channel 1343 the longitudinal axis 134C of which is arranged at an angle 134E to the tangential direction 174T of the curvature of the segment 174 at the location of its downstream end. As can be seen, this transition 134D also comprises a buckle. It is clear that this buckle rather effects a rounded transition from the curvature of segment 174 into the sidewall 176 of the outlet channel 1343. As can be seen, the opposing sidewall 178 of the outlet channel 1343 connects to a parallel curvature connecting to the interior sidewall 168 of the channel that is formed at the location of the segment 174. Similar to what has been described above in relation to the outlet channel 1341, this buckle also ensures that the maximum pressure and/or fluid velocity of the heated ambient air blown out, as schematically indicated by arrow F, is situated substantially central in the outflow exit 1344 of the outlet channel. Furthermore, it is also clear that in addition, according to the exemplary embodiment shown, the flow of heated ambient air blown out, is preferably blown out of the outflow exit 1344 of the outlet channel 1343, in a direction transverse to the central longitudinal axis L of the device, which as described above for instance corresponds to the driving direction D. Similar to what has been described above, this also makes it possible to allow the flow of heated ambient air blown out to traverse a greater distance relative to the central longitudinal axis L. As can be seen, according to the exemplary embodiment shown, the angle 134E preferably is in the range of 80° up to and including 100°, for instance 90°. However, it is clear that alternative embodiments are possible wherein different angles 134B, 134E are chosen, however, in general the angles 134B, 134E are in the range of for instance 30° up to 150°, wherein the angles are chosen such that preferably the central longitudinal axis 134C of the outlet channels 1341 are substantially transverse to the central longitudinal axis L of the device, that means for instance with a deviation of 10° at the most, and wherein the maximum pressures and/or maximum current velocities of the flow of heated ambient air are situated substantially central in the outflow exit 1342, 1344 of the outlet channels. It has become clear that surprisingly, this embodiment, wherein the sidewalls of the centrifugal fan have not been configured rotationally symmetric, and wherein a buckle 134A is present in the transition to the outlet channel 1342, 1344 results in a sufficiently even distribution of the flow rate of the heated ambient air between both outlets 134 and that the fluid velocity and the pressure of the centrifugal fan is distributed more evenly in the outflow exit of the outlet channels, as a result of which the heated ambient air blown out can be blown farther out of the outlets 134 when considered transverse to the central longitudinal axis L, and as a consequence is capable of protecting a larger surface area of crops. The ratios shown in the drawings are representative of an advantageous embodiment of the housing 160 of the centrifugal fan. It is clear that alternative, advantageous embodiments are possible with limited deviations relative to the shapes shown in the Figure, wherein the deviations relative to the shape shown, that means relative distances, curvatures, etc. remain limited to 10% or less, preferably 5% or less.

Figure 8 shows an exploded view of the embodiment of the housing of the centrifugal fan 130 of Figure 7, in which the related bottom side 162 and upper side 164 of the housing 160 are shown here as well. The opening 163 in the bottom side 162, where the channel 150 connects to its upstream end 152 for branching off heated ambient air from the centrifugal fan 130, is also further shown.

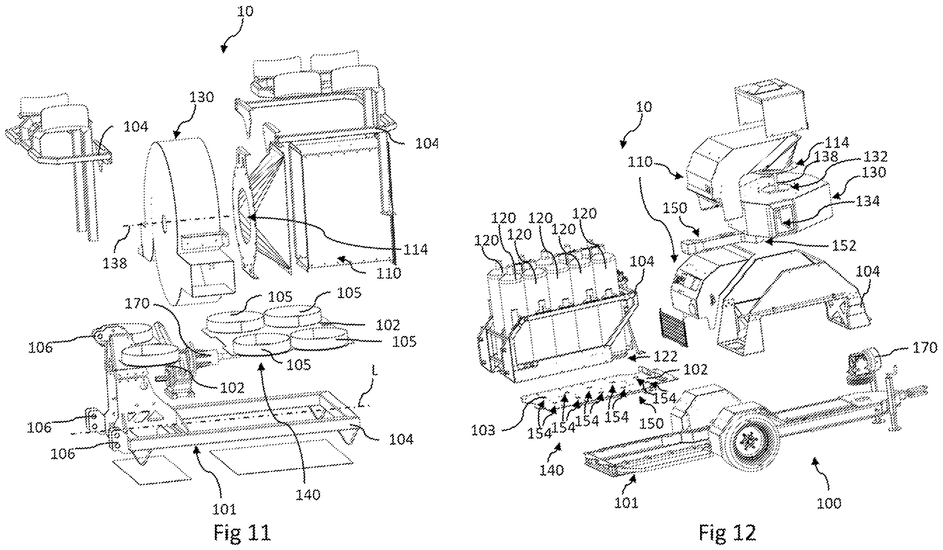

Figures 9-11 show an alternative embodiment of a device 10 similar to the embodiments described above. Similar elements are referred to by similar references and have a similar function. In addition, Figures 9 and 10 show a similar view in perspective with and without gas reservoirs 120, respectively. Figure 11 shows an exploded view of this embodiment of the device 10 further elucidating the component parts. As shown in Figures 9 - 11, according to this embodiment a device 10 is provided, wherein the central rotary shaft 138 of the fan 130 is arranged horizontally rather than upwards, for instance substantially parallel to the ground surface, for instance according to the longitudinal direction L of the device 10. As shown in Figures 9 - 11, it is advantageous for such an embodiment of the device 10 to make use of a centrifugal fan 130, similar to the one described on the basis of Figures 7 and 8 above, as this also ensures that the outlets 134 on either side of the longitudinal axis L comprise an outflow exit 1342, 1344 which, when the device is being used, are arranged at an equal height above the ground surface for preferably blowing out the heated ambient air transverse to the longitudinal direction L without there being a risk that the air flow blown out deflects downward or upward, as a result of which an optimal protection of the crops at the wanted height can be realized, as well as a maximization of the distance over which the air flow is blown out, thus increasing the quantity of crops treated during a passage of the device 10. Furthermore, it is clear that this embodiment of the device 10 is configured for containing six gas reservoirs 120. However, it is clear that alternative embodiments are possible wherein a different, suitable number of gas reservoirs 120 can be arranged in the device 10. As can furthermore be seen in Figures 9 - 11, the gas reservoirs 120 considered according to the longitudinal direction L, or in other words: according to the direction of movement D, are arranged both in front of or behind the position of the centrifugal fan 130, or in other words: according to the longitudinal direction L or the rotary shaft 138, on either side of the centrifugal fan 130. It is clear that alternative embodiments are possible, wherein all gas reservoirs 120 are arranged on one and the same side of the centrifugal fan 130 only, according to the longitudinal direction L and/or the direction of movement D, similar to the embodiments described above in relation to Figures 1 - 8. Furthermore, it is clear that the bottom sides 122 of the gas reservoirs 120 are arranged on a bottom plate 102 in which respective openings 103 are arranged for the downstream outlet 154 of the channels 150, for supplying heated ambient air that was branched-off from the centrifugal fan 130 to the bottom sides 122 of the gas reservoirs 120. As is furthermore clear from Figures 9 - 11, on top of this bottom plate 102 an upright cylindrical wall 105 is arranged for each gas reservoir 120, which wall connects to the cylindrical exterior wall of the gas reservoir 120 at the location of the bottom side 122 of the gas reservoir 120. In other words: this upright cylindrical wall 105 surrounds the gas reservoir 120 from the bottom plate 102
up, along at least a part of the gas reservoir near the bottom side 122 of the gas reservoir 120. In this way, a space is formed between the bottom plate 102 and the upright wall 105 and the bottom side 122 of the gas reservoir 120, in which space the heated ambient air supplied via the opening 103 is supplied and buffered for a suitable duration of time so that the part of the heat that is exchanged with the bottom side 122 of the gas reservoir 120 is increased, as in this space it is less easy for the heated ambient air to flow away to the surrounding area without having spent sufficient time near the bottom side 122 of the gas reservoir 120. It is clear that numerous alternative embodiments are possible for creating such a space that shields the supplied heated ambient air at the location of the bottom side 122 of the gas reservoir 120 from the surrounding area or allows it to flow out to the surrounding area in a controlled manner. In particular, alternative embodiments are possible wherein the shape of the upright wall is not cylindrical but comprises any other suitable shape, preferably a shape connecting to the shape of the exterior wall of the gas reservoir 120 at the location of the bottom side 122. As can furthermore be seen, according to the embodiment shown, the bottom plate 102 does not have to be one-part for all gas reservoirs 120, according to the exemplary embodiment shown in Figures 9 -11 the bottom pate 102 can be arranged individually for a subset of one or more gas reservoirs 120.

Furthermore, it is also clear that according to the embodiment shown in Figures 9-11, the device 10 can be arranged on a frame 101 that is configured to be removably attached to a suitable vehicle, such as for instance a tractor or any other suitable vehicle, for being transported by this vehicle during use. As can be seen, the embodiment of the frame 101 for that purpose for instance comprises suitable attachment elements 106 that are configured for cooperation with corresponding attachment elements for the removable attachment to a tractor or another suitable vehicle, for instance at the location of the front or rear of a tractor, when considered according to the driving direction D. However, it is clear that alternative embodiments are possible, wherein for instance similar to what has been described above, the embodiment shown is mounted to the frame 101 of a vehicle 100.

According to the embodiment shown in Figures 9 - 11, it is also clear that the centrifugal fan 130 furthermore comprises a suitable actuator 170, which for instance via a suitable mechanical coupling can removably be connected to a corresponding mechanical coupling connected to a suitable driving element such as for instance the driving motor of a tractor. It is clear that alternative embodiments are possible, wherein for instance similar to what has been described above a gas motor is used as actuator or any other suitable actuator and/or coupling can be used for driving the centrifugal fan 130, such as for instance any electric, hydraulic, mechanical, etc. actuator. Although not explicitly visible in Figures 9 - 11, it is clear that one or more suitable channels 150 branch off heated ambient air from the fan 130 so that this branched-off heated air is supplied to the openings 103 for heating the bottom sides of the gas reservoirs 120.

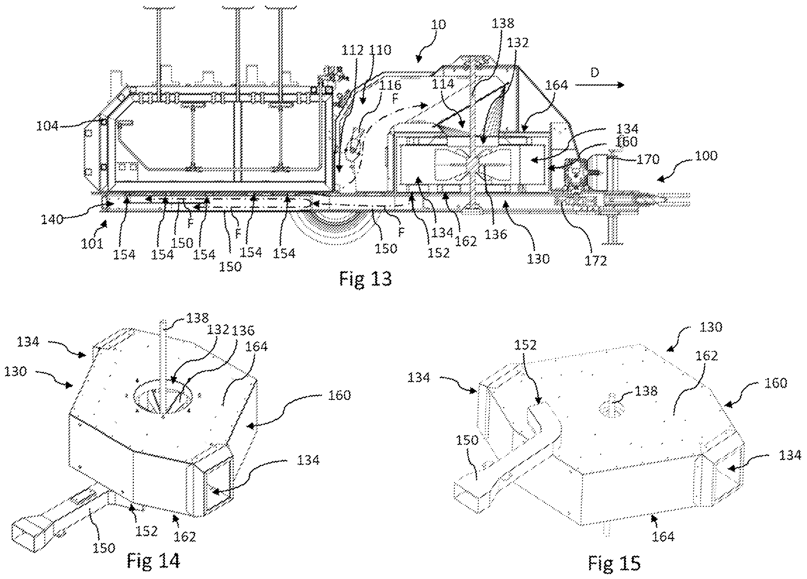

Figures 12 - 17 show a further embodiment of a device 10 similar to the one shown in Figures 1 - 8. Similar elements are referred to by similar references and have a similar function. As will be further elucidated, the main difference with the embodiment shown in Figures 1 - 8 is related to the embodiment of the centrifugal fan 130. Figure 12 shows an exploded view elucidating the individual elements and their assembly into the embodiment of the device 10. Figure 13 shows a cross-section for this embodiment of the device 10 similar to the cross-section shown in Figure 2A. It is clear that in the condition of the device 10 shown in Figure 13, the gas reservoirs 120 are not shown. Figures 14 and 15 show the housing 160 of the centrifugal fan 130 and how the upstream end connects to the bottom wall 162 of this housing near an outlet 134, in more detail.

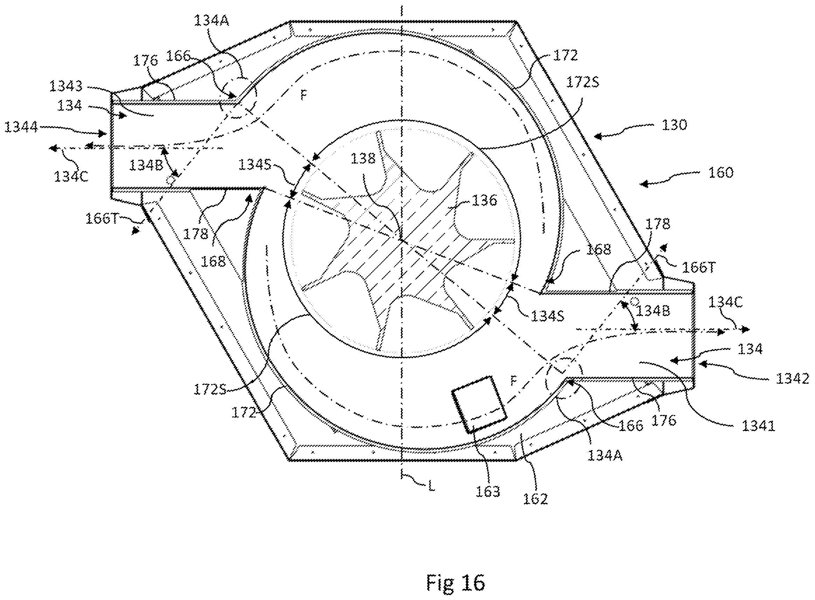

Figure 16 shows a cross-section similar to the cross-section of Figure 7 for an embodiment of the centrifugal fan 130 similar to the one shown in Figures 12 - 15. Similar elements are referred to by similar references and have a similar function as described above, for instance in relation to Figure 7. It is clear that the outlet channel 1341 shown bottom right in Figure 16, wherein the heated ambient air flows through this outlet channel 1341 to the outside via the outflow exit 1342 according to the exemplary embodiment shown in Figure 16 is formed and oriented substantially identical to the corresponding outlet channel 1341 as shown in Figure 7. That means that a similar buckle 134A is present at the location of the transition from the curvature of the segment 172 into the rectilinear sidewall 176 of the outlet channel. This also means that an angle 134B between the tangential direction 166T and the central direction 134C similar to the one in Figure 7 is present according to the exemplary embodiment shown in Figure 16, preferably in the range of 40° to 60°, for instance 50°. Different from the embodiment of Figure 7, the opposing outlet 134 and the related outlet channel 1343 with the related outflow exit 1344 of the embodiment of Figure 16 is indeed configured rotationally symmetric around the central rotary shaft 138 including the outlet 134 including the outlet channel 1341 including the related outflow exit 1342. As can be seen in Figure 16, the position and orientation of this opposing outlet channel 1343 correspond to the position and orientation of the outlet channel 1341 after a rotation of substantially 180° around the central rotary shaft 138. Therefore it is clear that at both opposing outlets 134, as shown, a similar angle 134B is present between the tangential direction 166T and the central direction 134C according to the exemplary embodiment shown in Figure 16, preferably in the range of 40°C to 60°C, for instance 50°. Furthermore it is also clear that according to this embodiment a similar buckle 134A is present at both opposing outlets 134 at the location of the transition from the curvature of the segment 172 into the rectilinear sidewall 176 of the outlet channel.

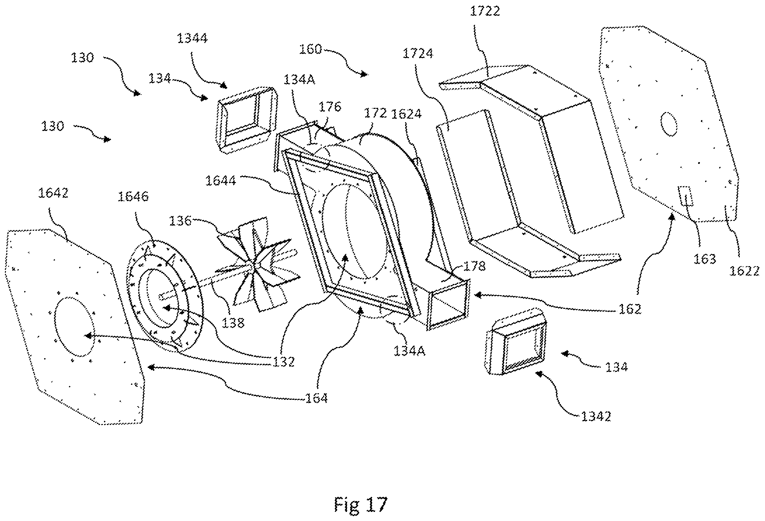

On the basis of an exploded view of this embodiment of the centrifugal fan 130, Figure 17 further shows in more detail that, preferably, as shown, according to this embodiment the bottom wall 162 and the upper wall 164 are configured double-walled. In addition, as already described on the basis of the exemplary embodiment of Figure 7, reinforcement ribs 1624, 1644 are arranged on the bottom wall 162 and the upper wall 164, respectively, on top of which ribs a double wall 1622, 1642, respectively, of the bottom wall 162 and/or upper wall is arranged. As can further be seen, the inlet 132 is formed by corresponding openings 132 in the double upper wall 164 and a guide piece 1646 arranged in between them, the guide piece having a similar connecting opening 132. The reinforcement ribs 1624, 1644 that are arranged between and cooperate with the plates of the double-walled upper and bottom walls 162, 164, ensure a firm, shape-retaining structure which generates fewer vibrations and thus result in less noise production as well as a longer life span of the centrifugal fan 130.

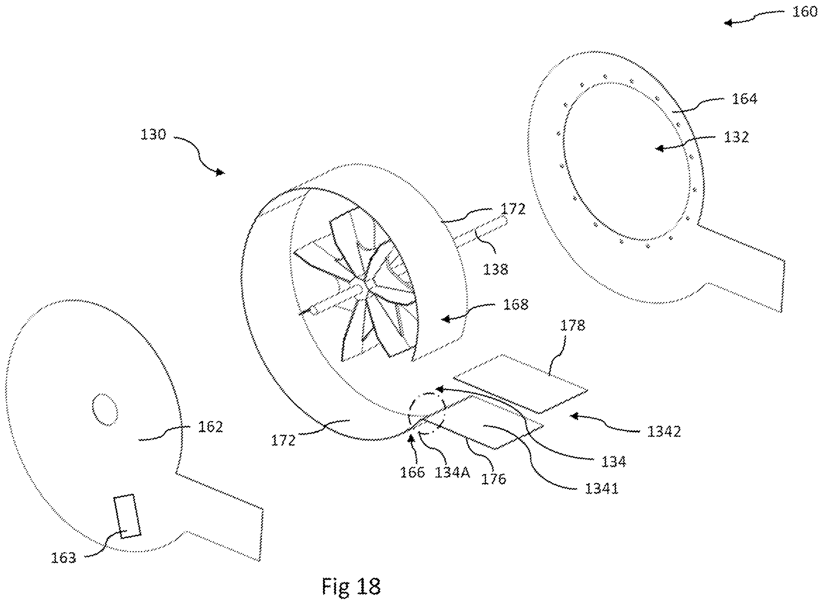

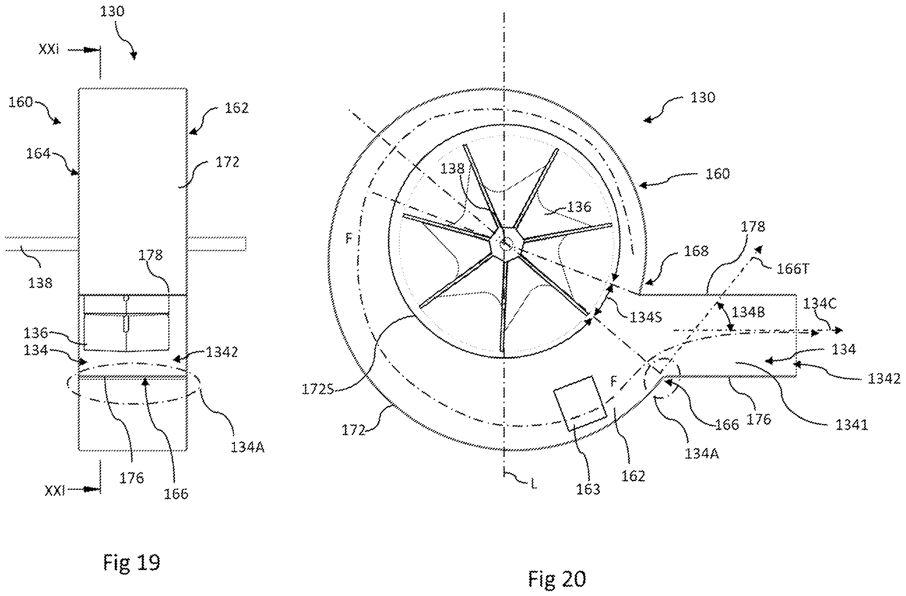

To conclude with, it is clear that even further alternative embodiments are possible, for instance it is particularly possible that the device 10 comprises a fan 130 with only one single outlet 134, such as for instance shown in Figures 18 - 20. It is clear that the embodiment shown of the centrifugal fan 130 is similar to the embodiments shown above, but wherein only the outlet 134 situated bottom right in the views of for instance Figures 7 or 16 is present. Figure 18 shows a similar view as the exploded view shown in Figure 8, the cross-section according to line XXI-XXI in the view of Figure 19 as shown in Figure 20 shows a similar cross-section as shown in Figures 7 and 16, and similar elements are referred to by similar references and have a similar function. Preferably, the only outlet 134 of such a centrifugal fan 130 as shown in Figures 18 - 20, similar to the one described above, is configured for advantageously blowing out the heated ambient air transverse to the longitudinal direction L or the direction of the movement D of the vehicle. According to the exemplary embodiment shown, the outlet channel 1341 for that purpose is shaped and oriented substantially identical to the corresponding outlet channel 1341 as shown in Figure 7 or 16. That means that a similar buckle 134A is present at the location of the transition from the curvature of the segment 172 into the rectilinear sidewall 176 of the outlet channel. This also means that an angle 134B between the tangential direction 166T and the central direction 134C similar to the one in Figure 7 is present according to the exemplary embodiment shown in Figure 16, preferably in the range of 40° to 60°, for instance 50°.

Furthermore, it is also clear that a heating device as described above, which is configured for passing a heated gas to the bottom side of a gas reservoir, can also be advantageous in alternative devices and/or vehicles, wherein for instance in addition to the option of branching-off heated ambient air, alternative sources of heated gas can also be used such as for instance a separate burner, electric heater, etc. for heating the ambient airthat is supplied to the bottom sides of the gas bottles, the branching off and/or supplying of combustion gasses of a combustion motor to the bottom sides of gas bottles, etc. In addition, it is advantageous that the gas bottles themselves or the frame on which the gas bottles are arranged on the device, are configured such that there is a specific free height between the outlet of the channel of the heating device and the bottom side of the part of the gas reservoir in which the gas is present. In case of a gas bottle this is for instance formed by support legs, support rings, etc. that are arranged at the bottom of the gas bottle for realizing a safe and firm support element for the gas bottle when contacting a ground surface. Preferably the free height up to the gas reservoir is in the range of 1cm to 10cm, for instance 2cm up and including 6cm, for instance 4cm. Although according to certain exemplary embodiments this free height can be configured as a half-open space below the gas reservoir in which the branched-off heated air flows out of the outlet of the channel of the heating device, it is clear that alternative embodiments are possible, wherein this free height is configured as a more confined space when the gas bottle has been arranged, such as for instance described above in relation to the upright wall connecting to the exterior of the gas bottle near the bottom of the gas bottle. Preferably, the temperature of the heated ambient air that is blown out by the fan is in the range of 50°C to 150°C, for instance in the range of 70°C up to and including 90°C, for instance 80°C. Preferably the temperature of the branched-off ambient air at the location of the bottom side of the gas reservoir is in the range of 30°C to 60°C, for instance in the range of 35°C up to and including 50°C. This permits the realization of an optimal heating of the gas bottles as a result of which an increased evaporation of the liquid gas into evaporated gas in the bottles is achieved.

It is clear that in addition to the embodiments described above, numerous varieties of embodiments and further combinations are possible without departing from the scope of protection as defined by the claims.

## Claims

1. Device (10) for preventing damage to crops using heated ambient air, comprising:
- a frame (101;104) comprising a floor plate (102);
- one or more gas reservoirs (120) arranged in the frame (101;104) on top of the floor plate (102); wherein the bottom sides (122) of the gas reservoirs (120) face the floor plate (102);
- a gas burner (110) operatively connected to the gas reservoirs (120), and configured for heating, by means of the combustion of gas from the gas reservoirs (120), ambient air supplied via an inlet (112) and discharging it at an outlet (114); and
- a centrifugal fan (130) operatively connected to the outlet (114) of the gas burner (110) for drawing in the heated ambient air via an inlet (132) and blowing out the heated ambient air via one or more outlets (134) of the centrifugal fan (130);
the device (10) further comprises:
- a heating device (140) for the gas reservoirs (120) comprising one or more channels (150) configured for:
- branching off a part of the flow of the heated ambient air to an outlet (134) of the centrifugal fan (130) via an inlet (152);
- allowing the branched-off heated ambient air to flow through one or more channels (150) to one or more downstream outlets (154) of the one or more channels (150); **characterized in that**
the device (10) further comprises:
- respective openings (103) provided through the floor plate (102) at the locations where the gas reservoirs (120) are placed on the floor plate (102) with their bottom sides (122);
said one or more channels of said heating device (140) for the gas reservoirs (120) being configured for allowing the branched-off heated ambient air to flow through the openings (103) upwards to the bottom side (122) of the at least one gas reservoir (120) via the one or more outlets (154).

2. Device (10) according to claim 1, wherein the heating device (140) is configured such that the flow rate of the branched-off heated ambient air is lower than 50% of the flow rate supplied to the outlet (134) of the centrifugal fan (130).

3. Device according to claim 1 or 2, wherein the heating device (140) is configured such that the flow rate of the branched-off heated ambient air is lower than or equal to 25% of the flow rate supplied to the outlet (134) of the centrifugal fan (130).

4. Device according to one or more of the preceding claims, wherein the inlet (152) comprises a cross-section having a surface area that is smaller than 50% of the surface area of the cross-section of the outlet (134), preferably smaller than or equal to 25%, for instance in the range of 5% to 20%.

5. Device according to one or more of the preceding claims, wherein the centrifugal fan (130) comprises an impeller (136) having an upward central rotary shaft (138).

6. Device according to one or more of the preceding claims, wherein the outlets (134) of the centrifugal fan (130) are arranged at an equal height above the ground surface; and/or
wherein the outlets (134) of the centrifugal fan (130) are configured for blowing out the heated ambient air at an angle of 10° or less to the ground surface.

7. Device according to one or more of the preceding claims, wherein the one or more outlets (134) comprise an outlet channel (1341, 1343) which connects to an upstream buckle (134A, 134D) as a result of which the central longitudinal axis (134C) of the outlet channel (1341, 1343) is at an angle to the tangential direction (166T, 174T) of the curvature of the respective upstream segment (172, 174) of the respective sidewall of the housing (160).

8. Device according to one or more of the preceding claims, wherein the centrifugal fan (130) comprises two opposing outlets (134).

9. Device according to claim 8, wherein both outlets (134) are arranged rotationally symmetric around the central rotary shaft (138) of the centrifugal fan (130).

10. Device according to claim 8, wherein the centrifugal fan (130) comprises a housing (160) including:
- two opposing rotationally symmetric segments (172); and
- in between of them two rotationally symmetric openings for the outlets (134), and
wherein a segment (174) is arranged that connects downstream to one of the segments (172) and that extends onward at an angle (137S) that is larger than the angle (134S) of the related opening of the outlet (134).

11. Device according to claim 10, wherein the additional segment (174) that is present at only one of the two outlets (134), has a curvature that differs from the curvature of the connecting rotationally symmetric segment (172).

12. Device according to claim 11, wherein the curvature of this segment (174) is configured such that, where said segment (174) extends beyond the segment (172) of the opposing sidewall (172), said sidewalls (172, 174) run substantially parallel.

13. Device according to one or more of the preceding claims, wherein the device (10) comprises a vehicle (100) to which:
- the gas burner (110);
- the gas reservoirs (120);
- the centrifugal fan (130); and
- the heating device (140)
are arranged.

14. Device according to one or more of the preceding claims, wherein the centrifugal fan (130) comprises two outlets (134) that are arranged on both sides of the central longitudinal axis (L) according to the direction of movement (D) of the vehicle and are configured to blow the heated ambient air blown out according to a direction away from the central longitudinal axis (L).

15. Method for preventing damage to crops, wherein a device (10) according to one or more of the preceding claims is used, and wherein the method comprises the following steps:
- providing respective openings (103) through the floor plate (102) at the locations where the gas reservoirs (120) are placed on the floor plate (102) with their bottom sides (122);
- the heating device (140) branching off a part of the flow of the heated ambient air to an outlet (134) of the centrifugal fan (130) via the inlet (152);
- the heating device (140) allowing the branched-off heated ambient air to flow through one or more channels (150) to one or more downstream outlets (154) of the one or more channels (150); and
- the heating device (140) allowing the branched-off heated ambient air to flow through the openings (103) upwards to the bottom side (122) of the at least one gas reservoir (120) via the one or more outlets (154).

## Patentansprüche

1. Einrichtung (10) zum Verhindern von Schäden an Nutzpflanzen unter Verwendung von erwärmter Umgebungsluft, umfassend:
- einen Rahmen (101; 104), der eine Bodenplatte (102) umfasst,
- einen oder mehrere Gasspeicher (120), die im Rahmen (101; 104) oben auf der Bodenplatte (102) angeordnet sind; wobei die Unterseiten (122) der Gasspeicher (120) der Bodenplatte (102) zugewandt sind;
- einen Gasbrenner (110), der funktionsfähig mit den Gasspeichern (120) verbunden ist und zum Erwärmen, mittels der Verbrennung von Gas aus den Gasspeichern (120), von Umgebungsluft, die über einen Einlass (112) zugeführt wird, und zum Abführen dieser an einem Auslass (114) konfiguriert ist, und
- ein Zentrifugalgebläse (130), das funktionsfähig mit dem Auslass (114) des Gasbrenners (110) verbunden ist, um die erwärmte Umgebungsluft über einen Einlass (132) anzusaugen und die erwärmte Umgebungsluft über einen oder mehrere Auslässe (134) des Zentrifugalgebläses (130) auszublasen;
wobei die Einrichtung (10) ferner umfasst:
- eine Heizeinrichtung (140) für die Gasspeicher (120), die einen oder mehrere Kanäle (150) umfasst, die konfiguriert sind zum:
- Abzweigen eines Teil des Stroms der erwärmten Umgebungsluft über einen Einlass (152) zu einem Auslass (134) des Zentrifugalgebläses (130);
- Strömenlassen der abgezweigten erwärmten Umgebungsluft durch einen oder mehrere Kanäle (150) zu einem oder mehreren stromabwärtigen Auslässen (154) des einen oder der mehreren Kanäle (150); **dadurch gekennzeichnet, dass** die Einrichtung (10) ferner umfasst:
- entsprechende Öffnungen (103), die durch die Bodenplatte (102) an den Stellen vorgesehen sind, an denen die Gasspeicher (120) mit ihren Unterseiten (122) auf der Bodenplatte (102) platziert sind;
wobei der eine oder die mehreren Kanäle der Heizeinrichtung (140) für die Gasspeicher (120) zum Strömenlassen der abgezweigten erwärmten Umgebungsluft durch die Öffnungen (103) nach oben zur Unterseite (122) des mindestens einen Gasspeichers (120) über den einen oder die mehreren Auslässe (154) konfiguriert sind.

2. Einrichtung (10) nach Anspruch 1, wobei die Heizeinrichtung (140) so konfiguriert ist, dass die Durchflussmenge der abgezweigten erwärmten Umgebungsluft niedriger als 50% der Durchflussmenge ist, die dem Auslass (134) des Zentrifugalgebläses (130) zugeführt wird.

3. Einrichtung nach Anspruch 1 oder 2, wobei die Heizeinrichtung (140) so konfiguriert ist, dass die Durchflussmenge der abgezweigten erwärmten Umgebungsluft niedriger oder gleich 25% der Durchflussmenge ist, die dem Auslass (134) des Zentrifugalgebläses (130) zugeführt wird.

4. Einrichtung nach einem oder mehreren der vorhergehenden Ansprüche, wobei der Einlass (152) einen Querschnitt mit einem Oberflächenbereich umfasst, der kleiner als 50% der Oberflächenbereich des Querschnitts des Auslasses (134), vorzugsweise kleiner oder gleich 25% ist, beispielsweise im Bereich von 5% bis 20% liegt.

5. Einrichtung nach einem oder mehreren der vorhergehenden Ansprüche, wobei das Zentrifugalgebläse (130) ein Laufrad (136) mit einer nach oben gerichteten zentralen Drehwelle (138) umfasst.

6. Einrichtung nach einem oder mehreren der vorhergehenden Ansprüche, wobei die Auslässe (134) des Zentrifugalgebläses (130) in gleicher Höhe über der Grundoberfläche angeordnet sind; und/oder
wobei die Auslässe (134) des Zentrifugalgebläses (130) zum Ausblasen der erwärmten Umgebungsluft in einem Winkel von 10° oder weniger zur Grundoberfläche konfiguriert sind.

7. Einrichtung nach einem oder mehreren der vorhergehenden Ansprüche, wobei der eine oder die mehreren Auslässe (134) einen Auslasskanal (1341, 1343) umfassen, der an eine stromaufwärtige Wölbung (134A, 134D) anschließt, wodurch die zentrale Längsachse (134C) des Auslasskanals (1341, 1343) in einem Winkel zur tangentialen Richtung (166T, 174T) der Krümmung des entsprechenden stromaufwärtigen Segments (172, 174) der entsprechenden Seitenwand des Gehäuses (160) steht.

8. Einrichtung nach einem oder mehreren der vorhergehenden Ansprüche, wobei das Zentrifugalgebläse (130) zwei gegenüberliegende Auslässe (134) umfasst.

9. Einrichtung nach Anspruch 8, wobei beide Auslässe (134) rotationssymmetrisch um die zentrale Drehwelle (138) des Zentrifugalgebläses (130) angeordnet sind.

10. Einrichtung nach Anspruch 8, wobei das Zentrifugalgebläse (130) ein Gehäuse (160) umfasst, das beinhaltet:
- zwei gegenüberliegende rotationssymmetrische Segmente (172); und
- dazwischen zwei rotationssymmetrische Öffnungen für die Auslässe (134), und wobei ein Segment (174) angeordnet ist, das stromabwärts an eines der Segmente
(172) anschließt und das sich in einem Winkel (137S) nach vorne erstreckt, der größer ist als der Winkel (134S) der zugehörigen Öffnung des Auslasses (134).

11. Einrichtung nach Anspruch 10, wobei das zusätzliche Segment (174), das nur an einem der beiden Auslässe (134) vorhanden ist, eine Krümmung aufweist, die sich von der Krümmung des anschließenden rotationssymmetrischen Segments (172) unterscheidet.

12. Einrichtung nach Anspruch 11, wobei die Krümmung dieses Segments (174) so konfiguriert ist, dass dort, wo sich das Segment (174) über das Segment (172) der gegenüberliegenden Seitenwand (172) hinaus erstreckt, die Seitenwände (172, 174) im Wesentlichen parallel verlaufen.

13. Einrichtung nach einem oder mehreren der vorhergehenden Ansprüche, wobei die Einrichtung (10) ein Fahrzeug (100) umfasst, zu dem:
- der Gasbrenner (110);
- die Gasspeicher (120);
- das Zentrifugalgebläse (130); und
- die Heizeinrichtung (140) angeordnet sind.

14. Einrichtung nach einem oder mehreren der vorhergehenden Ansprüche, wobei das Zentrifugalgebläse (130) zwei Auslässe (134) umfasst, die nach der Bewegungsrichtung (D) des Fahrzeugs beidseitig der zentrale Längsachse (L) angeordnet sind und dazu konfiguriert sind, die ausgeblasene erwärmte Umgebungsluft nach einer Richtung weg von der zentreale Längsachse (L) zu blasen.

15. Verfahren zum Vermeiden von Schäden an Nutzpflanzen, wobei eine Einrichtung (10) nach einem oder mehreren der vorhergehenden Ansprüche verwendet wird, und wobei das Verfahren folgende Schritte umfasst:
- Bereitstellen entsprechender Öffnungen (103) durch die Bodenplatte (102) an den Stellen, an denen die Gasspeicher (120) mit ihren Unterseiten (122) auf der Bodenplatte (102) platziert sind;
- die Heizeinrichtung (140) zweigt einen Teil des Stroms der erwärmten Umgebungsluft über den Einlass (152) zu einem Auslass (134) des Zentrifugalgebläses (130) ab;
- die Heizeinrichtung (140) lässt die abgezweigte erwärmte Umgebungsluft durch einen oder mehrere Kanäle (150) zu einem oder mehreren stromabwärtigen Auslässen (154) des einen oder der mehreren Kanäle (150) strömen; und
- die Heizeinrichtung (140) lässt die abgezweigte erwärmte Umgebungsluft durch
die Öffnungen (103) nach oben zur Unterseite (122) des mindestens einen Gasspeichers (120) über den einen oder die mehreren Auslässe (154) strömen.

## Revendications

1. Dispositif (10) permettant d'éviter des dommages aux cultures à l'aide de l'air ambiant chauffé, comprenant :
- un cadre (101 ; 104) comprenant une plaque de sol (102) ;
- un ou plusieurs réservoirs de gaz (120) agencés dans le cadre (101 ; 104) au-dessus de la plaque de sol (102) ; lesdits côtés inférieurs (122) des réservoirs de gaz (120) faisant face à la plaque de sol(102) ;
- un brûleur à gaz (110) fonctionnellement raccordé aux réservoirs de gaz (120), et conçu pour chauffer, au moyen de la combustion de gaz en provenance des réservoirs de gaz (120), l'air ambiant fourni par l'intermédiaire d'une entrée (112) et le décharger au niveau d'une sortie (114) ; et
- un ventilateur centrifuge (130) raccordé fonctionnellement à la sortie (114) du brûleur à gaz (110) destiné à aspirer l'air ambiant chauffé par l'intermédiaire d'une entrée (132) et souffler vers l'extérieur l'air ambiant chauffé par l'intermédiaire d'une ou plusieurs sorties (134) du ventilateur centrifuge (130) ;
le dispositif (10) comprenant en outre :
- un dispositif de chauffage (140) pour des réservoirs de gaz (120) comprenant un ou plusieurs canaux (150) conçus pour :
- dévier une partie de l'écoulement de l'air ambiant chauffé vers une sortie (134) du ventilateur centrifuge (130) par l'intermédiaire d'une entrée (152) ;
- permettre à l'air ambiant chauffé dévié de s'écouler à travers un ou plusieurs canaux (150) vers une ou plusieurs sorties en aval (154) du ou des canaux (150) ; **caractérisé en ce que** le dispositif (10) comprend en outre :
- des ouvertures respectives (103) ménagées à travers la plaque de sol (102) au niveau des emplacements où les réservoirs de gaz (120) sont placés sur la plaque de sol (102) avec leurs côtés inférieurs (122) ;
ledit ou lesdits canaux dudit dispositif de chauffage (140) pour les réservoirs de gaz (120) étant conçus pour permettre à l'air ambiant chauffé dévié de s'écouler à travers les ouvertures (103) vers le haut vers le côté inférieur (122) du au moins un réservoir de gaz (120) par l'intermédiaire de la ou des sorties (154).

2. Dispositif (10) selon la revendication 1, ledit dispositif de chauffage (140) étant conçu de sorte que le débit de l'air ambiant chauffé dévié soit inférieur à 50 % du débit fourni à la sortie (134) du ventilateur centrifuge (130).

3. Dispositif selon la revendication 1 ou 2, ledit dispositif de chauffage (140) étant conçu de sorte que le débit de l'air ambiant chauffé dévié soit inférieur ou égal à 25 % du débit fourni à la sortie (134) du ventilateur centrifuge (130).

4. Dispositif selon une ou plusieurs des revendications précédentes, ladite entrée (152) comprenant une section transversale comportant une superficie inférieure à 50 % de la superficie de la section transversale de la sortie (134), de préférence inférieure ou égale à 25 %, par exemple comprise dans la plage de 5 % à 20 %.

5. Dispositif selon une ou plusieurs des revendications précédentes, ledit ventilateur centrifuge (130) comprenant une roue (136) comportant un arbre rotatif central ascendant (138).

6. Dispositif selon une ou plusieurs des revendications précédentes, lesdites sorties (134) du ventilateur centrifuge (130) étant agencées à une hauteur égale au-dessus de la surface du sol ; et/ou
lesdites sorties (134) du ventilateur centrifuge (130) étant conçues pour souffler vers l'extérieur l'air ambiant chauffé selon un angle inférieur ou égal à 10° par rapport à la surface du sol.

7. Dispositif selon une ou plusieurs des revendications précédentes, ladite ou lesdites sorties (134) comprenant un canal de sortie (1341, 1343) qui se raccorde à une pliure en amont (134A, 134D) grâce à laquelle l'axe longitudinal central (134C) du canal de sortie (1341, 1343) forme un angle par rapport à la direction tangentielle (166T, 174T) de la courbure du segment en amont respectif (172, 174) de la paroi latérale respective du boîtier (160).

8. Dispositif selon une ou plusieurs des revendications précédentes, ledit ventilateur centrifuge (130) comprenant deux sorties opposées (134).

9. Dispositif selon la revendication 8, lesdites deux sorties (134) étant agencées à symétrie de rotation autour de l'arbre rotatif central (138) du ventilateur centrifuge (130).

10. Dispositif selon la revendication 8, ledit ventilateur centrifuge (130) comprenant un boîtier (160) comprenant :
- deux segments opposés à symétrie de rotation (172) ; et
- entre elles deux ouvertures à symétrie de rotation pour les sorties (134), et un segment (174) étant agencé qui se raccorde en aval à l'un des segments
(172) et qui s'étend vers l'avant selon un angle (137S) qui est plus grand que l'angle (134S) de l'ouverture relative de la sortie (134).

11. Dispositif selon la revendication 10, ledit segment supplémentaire (174), présent uniquement au niveau de l'une des deux sorties (134), comportant une courbure différente de la courbure du segment de raccordement à symétrie de rotation (172).

12. Dispositif selon la revendication 11, ladite courbure de ce segment (174) étant conçue de sorte que, là où ledit segment (174) s'étend au-delà du segment (172) de la paroi latérale opposée (172), lesdites parois latérales (172, 174) s'étendent sensiblement parallèles.

13. Dispositif selon une ou plusieurs des revendications précédentes, ledit dispositif (10) comprenant un véhicule (100) sur lequel :
- le brûleur à gaz (110) ;
- les réservoirs de gaz (120) ;
- le ventilateur centrifuge (130) ; et
- le dispositif de chauffage (140) sont agencés.

14. Dispositif selon une ou plusieurs des revendications précédentes, ledit ventilateur centrifuge (130) comprenant deux sorties (134) qui sont agencées de part et d'autre de l'axe longitudinal central (L) selon la direction de déplacement (D) du véhicule et sont conçus pour souffler l'air ambiant chauffé soufflé vers l'extérieur selon une direction s'éloignant de l'axe longitudinal central (L).

15. Procédé permettant d'éviter des dommages aux cultures, un dispositif (10) selon une ou plusieurs des revendications précédentes étant utilisé, et ledit procédé comprenant les étapes suivantes :
- l'aménagement d'ouvertures respectives (103) à travers la plaque de sol (102) au niveau des emplacements où les réservoirs de gaz (120) sont placés sur la plaque de sol (102) avec leurs côtés inférieurs (122) ;
- le dispositif de chauffage (140) déviant une partie de l'écoulement de l'air ambiant chauffé vers une sortie (134) du ventilateur centrifuge (130) par l'intermédiaire de l'entrée (152) ;
- le dispositif de chauffage (140) permettant à l'air ambiant chauffé dévié de s'écouler à travers un ou plusieurs canaux (150) vers une ou plusieurs sorties en aval (154) du ou des canaux (150) ; et
- le dispositif de chauffage (140) permettant à l'air ambiant chauffé dévié de s'écouler à travers les ouvertures (103) vers le haut jusqu'au côté inférieur (122) du au moins un réservoir de gaz (120) par l'intermédiaire de la ou des sorties (154).
